Europäisches Patentamt

European Patent Office

Office européen des brevets

(19)

(11) Veröffentlichungsnummer: **0 068 517**
**B1**

(12) **EUROPÄISCHE PATENTSCHRIFT**

(45) Veröffentlichungstag der Patentschrift:
**29.01.86**

(51) Int. Cl.⁴: **F 02 B  37/12**

(21) Anmeldenummer: **82200342.2**

(22) Anmeldetag: **18.03.82**

(54) Turbinengesteuertes Bypassventil für Verbrennungsmotoren mit Turbolader.

(30) Priorität: **30.06.81  CH 4291/81**

(43) Veröffentlichungstag der Anmeldung:
**05.01.83 Patentblatt 83/1**

(45) Bekanntmachung des Hinweises auf die Patenterteilung:
**29.01.86 Patentblatt 86/5**

(84) Benannte Vertragsstaaten:
**CH DE FR GB LI**

(56) Entgegenhaltungen:
**GB - A - 2 041 084**
**US - A - 4 125 999**

(73) Patentinhaber: **BBC Aktiengesellschaft Brown, Boveri & Cie., Haselstrasse, CH-5401 Baden (CH)**

(72) Erfinder: **Hörler, Hansulrich, Dr., Lerchenberg 5, CH-8046 Zürich (CH)**
Erfinder: **Perego, Ambrogio, Bahnhofstrasse 103 D, CH-5430 Wettingen (CH)**

## Beschreibung

Die vorliegende Erfindung betrifft ein turbinendruckgesteuertes Bypassventil für Verbrennungsmotoren mit Turbolader nach dem Oberbegriff des Patentanspruchs 1.

Bei Viertaktverbrennungsmotoren mit hoher Aufladung, insbesondere bei solchen Dieselmotoren, besteht bei starrer Verbindung der Antriebswelle mit den vortriebserzeugenden Mitteln, beispielsweise einem Festpropeller, das Problem der Anpassung des vom Verdichter eines Turboladers gelieferten Luftstromes an den Luftbedarf bei der jeweiligen Belastung. Ohne entsprechende Vorkehrungen würde bei Teillast z.B. bei Festpropellerbetrieb und noch stärker bei Drehzahldrükkung der Ladedruck zu tief absinken und der Motor daher unter Luftmangel leiden. Ausserdem besteht bei üblichen Turboladern mit fester Turbinen- und Verdichterbeschaufelung, die normalerweise für den Betrieb im Vollastbereich optimiert sind, im Teillastbereich die Gefahr des Pumpens.

Dies lässt sich vermeiden durch ein gesteuertes Bypassventil, durch das der Verdichterauslasskanal mit dem Turbineneinlasskanal verbunden werden kann. Dieses Bypassventil ist bei höherem Leistungsbedarf geschlossen, ausser kurzzeitig in Sonderfällen, wie z.B. bei Tragflügelbooten während der Verdrängungsfahrt kurz vor dem Austauchen, wo infolge des grossen Fahrtwiderstandes die Motordrehzahl noch gedrückt ist. Durch Aufheizen der Bypassluft in einem Abgaswärmetauscher und/oder einer Regeleinrichtung für den Turbineneinlassquerschnitt kann die Aufladecharakteristik noch verbessert werden.

Bei den Bypassen bekannter Bauart, siehe beispielsweise die DE-B-23 16 627, werden die Drücke $p_V$ und $p_T$, die nach dem Verdichter bzw. vor der Turbine herrschen, zur Steuerung des Hubes von Drosselmitteln benutzt, bei denen das den Durchtrittsquerschnitt verändernde Organ verdichterseitig eine kleinere wirksam druckbeaufschlagte Fläche aufweist als turbinenseitig. Dies hat zur Folge, dass der Übergang vom offenen Zustand des Drosselorgans bei niedriger Teillast in den vollständig geschlossenen Zustand im Bereich der Höchstleistung sehr breit ist, womit beispielsweise bei festen Schiffspropellern ein zufriedenstellender Betrieb von mittels Turboladern aufgeladenen Viertaktdieselmotoren praktisch erschwert ist.

Dies gilt gleichfalls für eine aus der GB-A-2 041 084 bekannte Bypasssteuerung für Turboladermotoren. Diese benutzt zur Steuerung die in der Verdichterluftleitung vor und in der Abgasleitung nach dem Motor verfügbaren Drücke und nützt auch rasche Druckschwankungen, die von den Auspuffstössen herrühren, zur Luftförderung über den Bypass aus, und zwar sowohl im Gleichdruck- als auch im Stossbetrieb. Diese Steuerung zeigt gegenüber älteren bekannten Ausführungen mit kolbengesteuerten Ventilen einen einfacheren Aufbau, indem sie, abgesehen vom mechanisch einfacheren Aufbau, auch keine Zusatzbrennkammer benötigt und ihr Wirkungsgrad von der Kraftstoffausnutzung her nicht beeinträchtigt wird. Zum vereinfachten Aufbau gegenüber früheren Ausführungen trägt bei, dass das Rückschlagventil gleichzeitig als Drosselorgan fungiert.

Für einen solchen Betrieb wird nämlich einerseits gefordert, dass der Bypass im Vollastbereich im allgemeinen dauernd geschlossen ist, da dann der Motor in diesem Bereich mit optimalem Wirkungsgrad arbeitet und auch der Verdichter auf besten Wirkungsgrad in diesem Bereich ausgelegt ist. Andererseits soll die Gefahr des Pumpens, die bei einer solchen Auslegung eines Verdichters ohne verstellbare Verdichterschaufelung bei niedrigerer Teillast auftreten kann, vermieden werden, da der Ladedruck sonst stark absinkt, der Motor damit unter Luftmangel leidet, raucht und schlecht beschleunigt. Es treten dabei auch noch höhere Abgastemperaturen als bei Vollast auf. Der Bypass muss daher in einem gewissen Bereich niedriger Teillast offengehalten werden.

Ähnliche Verhältnisse, und zwar noch stärker ausgeprägt, treten bei hoher Leistung im Fahrzustand mit gedrückter Drehzahl auf, bei dem ebenfalls Pumpgefahr besteht.

Um diese Pumpneigung bei den erwähnten Betriebszuständen mit Sicherheit auszuschalten, ist es erforderlich, dass der Bypass bei Annäherung an diese Gefahrengrenzen bei Teillast rascher öffnet als dies bei den bekannten Ausführungen von «Voll offen» bis «Voll geschlossen» bzw. umgekehrt der Fall ist.

Die vorliegende, im kennzeichnenden Teil des Patentanspruchs 1 definierte Erfindung entstand aus der Aufgabe, den Schliessvorgang allein in Abhängigkeit vom Turbineneintrittsdruck $p_T$ zu steuern und ihn innerhalb eines gegenüber den bekannten Bypassen kleineren Änderungsbereiches des Turbineneintrittsdruckes $p_T$ zu beenden.

Die Erfindung wird im folgenden unter Bezugnahme auf die Zeichnungen näher beschrieben. In den Zeichnungen stellen dar:

Fig. 1 ein Diagramm, aus dem das Zusammenwirken eines Bypassventils nach der vorliegenden Erfindung mit einem Dieselmotor hervorgeht, und die

Fig. 2 und 3 zwei Ausführungsbeispiele von erfindungsgemässen Bypassventilen.

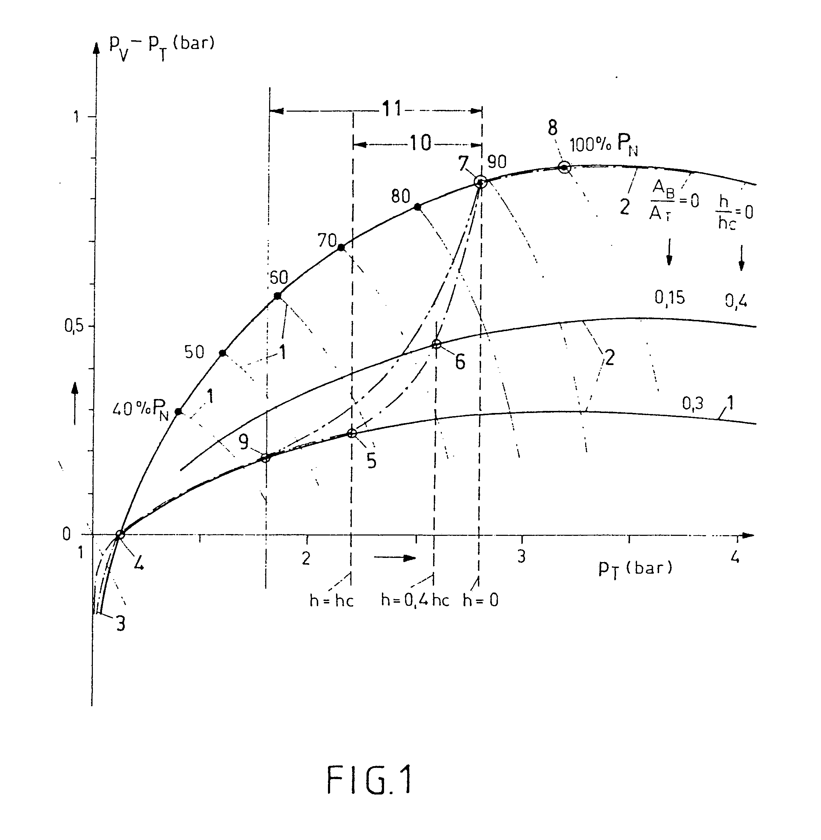

Beim Diagramm der Fig. 1 stellt die Ordinate den Differenzdruck $p_V-p_T$ und die Abszisse den Abgasdruck $p_T$ vor der Turbine dar. Das Motorkennfeld bei Festpropellerbetrieb wird durch die Kurvenschar 1 repräsentiert, wobei die Parameter 40, 50, 60% $P_N$ usw. konstante Motorleistungen in Prozent der Nennleistung $P_N$ bedeuten. Die Kurvenschar 2 gilt für drei Werte der Parameter $A_B/A_T$ bzw. $h/h_c$, wobei $A_B$ die wirksame Bypassdurchflussfläche und $A_T$ die wirksame Turbinendurchflussfläche sowie $h$ Zwischenwerte des Ventilhubes und $h_c$ den maximalen Ventilhub bezeichnen. Die senkrechten strichlierten Geraden geben die Gleichgewichtslagen des Ventils wieder, wie aus den unten erläuterten Gleichgewichtsbedingungen hervorgeht. Bei den erwähnten Vergleichsbypassventilen sind diese Geraden nach rechts geneigt und schneiden die Kurvenschar 2 in den Punkten 9 und 7, die weiter auseinanderliegen als die Punkte 5 und 7 des erfindungsgemässen Bypassventils. Der strichpunktierte Kurvenzug 3-4-5-6-7-8 stellt demnach eine beispielsweise Betriebslinie des Schliess- bzw. Öffnungsvorganges eines Bypassventiles gemäss vorliegender Erfindung dar, wobei die Strecke 10 den Übergangsbereich darstellt, d.h., die Druckschwankung $\pm \Delta p_T$, innerhalb deren sich ein Schliess- bzw. Öffnungsvorgang des Bypassventils vollzieht.

Der über dieser Betriebslinie verlaufende Kurvenzug 4-9-7 mit jeweils zwei Punkten zwischen benachbarten Stücken stellt dagegen qualitativ die Betriebslinie für die erwähnten Vergleichsbypassventile dar. Sein Übergangsbereich 11 zwischen seinem vollen Öffnungshub $h_c$ und dem voll geschlossenen Zustand $h = o$ ist grösser als bei dem vorliegenden Bypassventil und zeigt demnach im Betrieb ein schlechteres Übergangsverhalten.

Auf weitere Details dieses Diagrammes wird bei Beschreibung der in den Fig. 2 und 3 dargestellten Ausführungsbeispiele eingegangen.

Bei der schematisch dargestellten Ausführung nach Fig. 2 zeigt der Pfeil 12 die Strömungsrichtung der von einem nicht dargestellten Verdichter eines Turboladers in einen Motor geförderten, verdichteten Ladeluft. Die Pfeile 13 deuten die über das Bypassventil vor die Turbine des Turboladers überströmende Bypassluft an. Ein Gehäuse 14 ist mit seinem Flansch 15 an eine nicht dargestellte Ladeluftleitung angeflanscht und ein zweiter Flansch 16 dient zum Anschluss einer nicht dargestellten Bypassleitung, die das Bypassventil mit einer Abgasleitung des Motors an einer Stelle vor der Turbine des Turboladers verbindet. Falls das Bypassventil nicht selbst, wie im vorliegenden Falle, als Rückschlagventil wirkt, das ein Überströmen von Abgas in die Ladeluftleitung verhindert, falls der Differenzdruck $p_V - p_T$ negativ werden sollte, so wird in dieser Bypassleitung ein Rückschlagventil vorgesehen.

Die Elemente des Ventils sind in dieser Ausführung bekannt. Am vorderen Ende einer im Gehäuse 14 verschieblich gelagerten Ventilspindel 17 befindet sich eine Ventilplatte 18, deren Maximalhub $h_c$ beträgt. Die Ventilspindel 17 weist eine Längsbohrung 19 und hinter einem Kolben 21 eine Querbohrung 20 auf, welche beiden Bohrungen die Ladeluftleitung mit einem Zylinderraum 22 hinter dem Kolben 21 verbinden. In diesem Zylinderraum 22 herrscht also immer der jeweilige Druck $p_V$ der Ladeluft, wogegen im Zylinderraum 23 vor dem Kolben 21 der Umgebungsluftdruck $p_U$ herrscht, da dieser Zylinderraum über einen offenen Belüftungsstutzen 24 mit der Atmosphäre kommuniziert.

In einer Nabe 25 für die Lagerung der Ventilspindel 17 ist eine in dieser Nabe verschraubbare Federhülse 26 vorgesehen, zwischen welcher und dem Kolben 21 eine Feder 27 eingespannt ist. Die Federhülse erlaubt die Einstellung der gewünschten Federkraft. Zur Einstellung des Maximalhubes dient eine am hinteren Ende des Gehäuses vorgesehene Schraube 28.

Der Flansch 16 dient zum Anschluss einer das Gehäuse 14 mit dem Turbineneinlass verbindenden Bypassleitung. Im Gehäuse herrscht daher im Bereich des Flansches 16 der Druck $p_T$ vor der Turbine.

Es wurde oben gesagt, dass in der Bypassleitung ein schnelles Rückschlagventil vorgesehen ist, dass bei $p_T > p_V$ ein Überströmen von Abgas in die Ladeluftleitung verhindert. Ein solches Rückschlagventil kann man sich ersparen, wenn man das Abschlussorgan im Bypassventil, hier also die Ventilplatte 18, selbst als Rückschlagventil ausbildet, wie bei der Ausführung der Ventilplatte 18 nach Fig. 2. Diese Ventilplatte ist mit ihrer Nabe 29 auf einem begrenzten Weg verschieblich auf einem Zapfen 30 der Ventilspindel 17 gelagert. Die Schulter des Zapfens 30 bildet die hintere Wegbegrenzung, die vordere Begrenzung kann vom Sitz der Ventilplatte 18 an der Innenseite des Flansches 15 selbst gebildet werden. Solange $p_V > p_T$ ist, liegt die Nabe 29 an der Schulter des Zapfens 30 an, bei $p_T > p_V$ wird die leichte Ventilplatte auf ihren Sitz gedrückt und verhindert so das Überströmen von Abgas in die Ladeluft.

Um die Steuerung des Hubes h der Ventilplatte allein in Abhängigkeit vom Turbineneintrittsdruck $p_T$ zu erhalten, wie es einer der Aufgaben der Erfindung entspricht, sind bestimmte Verhältnisse zwischen den Abmessungen von Kolben 21 und Ventilplatte 18 einzuhalten. Man erreicht eine solche Steuerungs-Charakteristik, wenn man die Ventildruckfläche $A_Q$ und die Kolbenfläche $A_K$ wenigstens angenähert gleich ausführt. Dafür gilt die folgende Gleichgewichtsbedingung, in der $A_Q$ die verdichterseitige Ventildruckfläche der Ventilplatte 18, $A'_Q$ die wirksame Druckfläche auf der Rückseite der Ventilplatte, $A_K$ die wirksame Druckfläche des Kolbens 21 gegenüber dem hinteren Zylinderraum 22, $A'_K$ die wirksame Druckfläche des Kolbens gegenüber dem vorderen Zylinderraum 23, $F_F$ die Federkraft $F_0$ die Vorspannkraft und c die Federkonstante der Feder 27 bedeuten:

$$A_Q p_V - A_K p_V - F_F = A'_K p_U - A'_Q p_T.$$ Dies gilt aber nur für $p_V > p_T$.

Da $A_Q = A_K = A$, $A'_Q = A'_K = A'$ und $F_F = F_{F_0} - ch$, folgt $h = (A'/c) \cdot (p_U - p_T) + F_{F_0}/c$, d.h., der Hub h ist allein vom Turbineneintrittsdruck $p_T$ abhängig.

Bei dieser Ausführung liegt der Kolben 21, dessen Abdichtung auf bekannte Weise durch Kolbenringe, Labyrinthe oder Lippendichtungen etc. erfolgen kann, stromabwärts der Ventilplatte 18. Bei der in Fig. 3 schematisch dargestellten Variante hingegen ist der Kolben oder ein funktionell gleichwertiges Element stromaufwärts des Ventilorgans angeordnet.

Das Ventilorgan ist hier ein Ringplattenventil 31, das bei sehr kleinem Hub grosse Strömungsquerschnitte bietet und wegen der kleinen Masse seiner aus dünnem Blech bestehenden Ventilplatte 32 als besonders rasch ansprechendes Rückschlagventil wirkt.

Anstelle eines Kolbens ist bei dieser Ausführung ein Metallbalg 33 und als Feder eine Tellerfeder 34 vorgesehen. Die Tellerfeder, deren Kennlinie sich durch Zufügen, Wegnehmen oder Umkehren einzelner Elemente besonders einfach ändern lässt, ist im Inneren des gegen die Verdichterseite hin vollkommen geschlossenen Metallbalges untergebracht. Diese Konstruktion ist also völlig gasdicht.

Mit einer Schraube 35 kann der Hub und mit einer Schraube 36 die Federvorspannung eingestellt werden, so dass sich dieses Bypassventil ebenso wie jenes nach Fig. 1 den individuellen Eigenschaften verschiedener Motoren anpassen lässt. Durch Verbindungsbohrungen 37 und 38 wird erreicht, dass vor und hinter dem Metallbalg 33 der Druck $p_V$ bzw. $p_U$ wirkt.

Wie für die erste Ausführung gilt auch für diese, dass das erfindungsgemäss gewünschte Verhalten durch ein Verhältnis $A_Q/A_K \approx 1$ erzielt wird. Für das Ringplattenventil setzt sich die Ventildruckfläche $A_Q$ dabei aus der Summe der den Ventildurchtrittsquerschnitt abdeckenden Ringflächen der Ventilplatte 32 zusammen, deren Breiten mit 39 bezeichnet sind. Beim Metallbalg ist $A_K$ der Querschnitt, der durch einen Durchmesser zwischen der äusseren und inneren Wellung bestimmt ist. Es ist auch zu berücksichtigen, dass der Metallbalg zur Federwirkung mit beiträgt.

Damit die Ventilplatten 18 bzw. 32 auch bei schwachem Überwiegen des Turbineneintrittsdruckes $p_T$ gegenüber dem Ladeluftdruck $p_V$ ansprechen, könnte es sich als zweckmässig erweisen, schwache Schliessfedern vorzusehen, die das Rückschlagen unterstützen.

Praktisch genügt es, wenn das Verhältnis $A_Q/A_K$ angenähert 1 ist, um den angestrebten schmalen Übergangsbereich für den Schliessvorgang des Ventils zu erhalten. Die Breite des Übergangsbereiches lässt sich durch Einbau einer anderen Feder, der Schliesspunkt und der maximale Hub können mit den erwähnten Schrauben 26, 28 bzw. 35, 36 variiert werden.

Bei einem Verhältnis $A_Q/A_K < 1$, d.h., $A_K > A_Q$, würde man zwar einen noch schmäleren Übergangsbereich als bei einem Ventil mit $A_K \approx A_Q$ und auch grössere Variationsmöglichkeiten für die Feder erhalten. Falls aber $A_K/A_Q$ zu gross wird, etwa grösser als 2, so könnten sich bei höheren Drücken zwei Schnittpunkte der Gleichgewichtskurven des Ventils mit den Kurven konstanter Leistung ergeben, so dass die Betriebslinie nicht eindeutig wäre. Dies ist unzulässig. Ausserdem wäre der Bauaufwand für den Kolben sehr gross. Der für die vorliegenden Ausführungen gewählte Wert von $\approx 1$ für $A_K/A_Q$ bzw. $A_Q/A_K$ stellt einen bestmöglichen Kompromiss dar, der zudem den Vorteil aufweist, dass bei einem allfälligen Pumpstoss, bei dem das $p_V$ schlagartig kurz absinkt, das Ventil nicht zu- oder aufgeschlagen und damit beschädigt wird.

## Patentansprüche

1. Turbinendruckgesteuertes Bypassventil für Verbrennungsmotoren mit Turbolader, zur Steuerung des Überströmens von der Ladeluftseite des Verdichters des Turboladers in den Abgaskanal vor dem Turbineneintritt, mit einem Ventilelement (18, 31) zum Öffnen und Schliessen der Verbindung zwischen der Ladeluftleitung und dem Abgaskanal, einem auf Differenzdrücke ansprechenden Betätigungsorgan (21, 33) zur Steuerung der Hauptbewegung des Ventilelements, wobei der Ladeluftdruck ($p_V$) einerseits auf die erste Seite des Ventilelementes (18, 31) und anderseits auf die zweite Seite des Betätigungsorgans (21, 33) ständig wirkt und die dabei erzeugten Kräfte einander entgegenwirken, und wobei Federmittel zur Erzielung des gewünschten Verlaufes der Hubbewegung und Einstellschrauben für den Maximalhub und die Federvorspannung vorgesehen sind, dadurch gekennzeichnet, dass auf der ersten Seite des Betätigungselementes der Umgebungsluftdruck ständig wirkt und dass das Verhältnis des Flächeninhaltes der wirksam druckbeaufschlagten Seiten des Betätigungsorgans (21, 33) zum Flächeninhalt der wirksam druckbeaufschlagten Seiten des Ventilelementes (18, 31) im wesentlichen gleich 1 ist, so dass die Steuerung des Ventilhubes im wesentlichen nur durch den Druck $p_T$ vor dem Turbineneintritt, der die zweite Seite des Ventilelementes (18, 31) beaufschlagt, bewirkt wird.

2. Bypassventil nach Anspruch 1, dadurch gekennzeichnet, dass das Ventilelement aus einer auf einem Zapfen (30) einer Ventilspindel (17) verschieblich gelagerten Ventilplatte (18) besteht, wobei der mögliche Verschiebeweg in der einen Richtung durch den Ventilsitz im Gehäuse und in der anderen Richtung durch einen Anschlag auf der Ventilspindel (17) begrenzt ist.

3. Bypassventil nach Anspruch 1, dadurch gekennzeichnet, dass das Ventilelement ein Ringplattenventil (31) ist, dass das Betätigungsorgan ein Metallbalg (33) ist, und dass die Federmittel aus einer innerhalb des Metallbalgs angeordneten Tellerfeder (34) bestehen.

## Revendications

1. Clapet de dérivation commandé par la pression de la turbine pour moteurs à combustion interne suralimentés par un turbocompresseur, pour la commande du passage depuis le côté de l'air de suralimentation du compresseur du turbocompresseur de suralimentation dans le conduit à gaz d'échappement avant l'entrée de la turbine, avec un élément de soupape (18, 31) pour ouvrir et fermer la liaison entre la conduite d'air de suralimentation et le conduit à gaz d'échappement, un organe de commande (21, 33) réagissant aux différences de pression pour commander le mouvement de levée de l'élément de soupape, dans lequel la pression ($p_V$) de l'air de suralimentation agit en permanence d'un part sur la première face de l'élément de soupape (18, 31) et d'autre part sur la deuxième face de l'organe de commande (21, 33) et les efforts ainsi engendré sont opposés l'un à l'autre, et dans lequel il est prévu des moyens élastiques pour obtenir le déroulement désiré du mouvement de levée ainsi que des vis de réglage de la levée maximale et de la précontrainte du ressort, caractérisé en ce que sur la première face de l'organe de commande agit en permanence la pression atmosphérique et en ce que le rapport de la surface des faces effectivement sous pression de l'organe de commande (21, 33) à la surface des faces effectivement sous pression de l'élément de soupape (18, 31) est sensiblement égal à 1, de sorte que la commande de la levée du clapet est essentiellement assurée par la seule pression $p_T$ régnant avant l'entrée de la turbine, pression qui est appliquée sur la deuxième face de l'élément de soupape (18, 31).

2. Clapet de dérivation suivant la revendication 1 caractérisé en ce que l'élément de soupape se compose d'un plateau de soupape (18) pouvant coulisser sur un tourillon (30) d'une tige de soupape (17), la course de coulissement possible étant limitée dans une direction par le siège de la soupape dans le corps et dans l'autre direction par une butée ménagée sur la tige de soupape (17).

3. Clapet de dérivation suivant la revendication 1, caractérisé en ce que l'élément de soupape est une soupape à plateau annulaire (31), en ce que l'organe de commande est un soufflet métallique (33) et en ce que les moyens élastiques consistent en une rondelle-ressort (34) disposée à l'intérieur du soufflet métallique.

## Claims

1. Turbine pressure controlled bypass valve for internal combustion engines with turbocharger, for controlling the overflow from the supercharged air side of the turbocharger compressor into the exhaust gas duct before the turbine inlet, having a valve element (18, 31) for opening and closing the connection between the supercharged air pipe and the exhaust gas duct, an actuating unit (21, 33) responding to differential pressures for controlling the lift movement of the valve element, wherein the supercharged air pressure ($p_V$) acts continuously, on the one hand, on the first side of the valve element (18, 31) and, on the other hand, on the second side of the actuating organ (21, 33) and the forces thus generated are mutually opposed, and wherein spring means are provided for attaining the desired curve of lift movement and ajustment screws are provided for the maximum lift and the spring preload, characterised in that the ambient air pressure acts continuously on the first side of the actuating element and that the ratio of the area content of the sides of the actuating organ (21, 33) effectively subject to pressure to the area content of the sides of the valve element (18, 31) effectively subject to pressure is substantially equal to one, so that the control of the valve lift is effected, in the main, only by the pressure $p_T$ before the turbine inlet, which pressure acts on the second side of the valve element (18, 31).

2. Bypass valve according to Claim 1, characterised in that the valve element consists of a valve plate (18) supported so that it can be displaced on a seating (30) of a valve spindle (17), the possible displacement path in one direction being limited by the valve seating in the housing and in the other direction by a stop on the valve spindle (17).

3. Bypass valve according to Claim 1, characterised in that the valve element is an annular plate valve (31), that the actuating unit is a metal bellows (33) and that the spring means consists of a plate spring (34) located within the metal bellows.

FIG.1